# FASCICULE DE BREVET EUROPEEN

(11) **EP 0 452 214 B1**
(45) Date de publication et mention de la délivrance du brevet: **24.08.1994**
(21) Numéro de dépôt: 91400959.2
(22) Date de dépôt: 10.04.1991
(51) Int. Cl.: A47J 31/42, A47J 42/18

(54) **Moulin à café et machine à café équipée d'un tel moulin**
Kaffeemühle und Kaffeemaschine mit solcher Mühle
Coffee mill and coffee machine equipped with such a mill

(30) Priorité: 12.04.1990 FR 9004719
(43) Date de publication de la demande: 16.10.1991
(73) Titulaire: BONNET S.A., F-69400 VILLEFRANCHE-SUR-SAONE (FR)
(72) Inventeur: Courtois, Jean Loup, F-69400 Villefranche sur Saone (FR)
(74) Mandataire: Boutin, Antoine

(56) Documents cités:
- DE-A- 3 503 300
- FR-A- 2 074 679
- US-A- 1 769 776

## Description

La présente invention concerne les moulins à café destinés à équiper les machines à café à usage professionnel comportant, à leur partie inférieure, un poste de versement de la poudre de café dans un réceptacle d'infusion.

Les moulins à café de ce genre sont conçus de façon à être en mesure de fournir, à chacune de leur mise en fonctionnement, la dose de poudre de café qui est nécessaire pour la confection d'une quantité d'infusion de café correspondant à une ou plusieurs tasses.

Cependant, les moulins actuels de ce genre présentent un certain nombre d'inconvénients.

Le principal d'entre eux réside dans le fait qu'en raison de leur conception il existe toujours une réserve d'une ou plusieurs doses de poudre de café dans les différentes parties d'un tel moulin et dans les conduits d'évacuation de cette poudre. Lors du broyage d'une nouvelle quantité de café, la poudre fraîche produite pousse le café déjà moulu dans un cylindre fixe de distribution et elle reste en attente dans le moulin jusqu'à ce qu'une nouvelle dose de poudre la pousse à son tour en avant. Ceci a donc pour inconvénient qu'à chaque fois la confection d'une infusion de café est réalisée avec une dose de poudre qui était en attente, et non pas de la poudre fraîchement moulue. L'infusion de café obtenue n'est donc pas de bonne qualité.

Par ailleurs, compte tenu des possibilités de stagnation d'une certaine quantité de poudre dans les conduits et autres passages d'évacuation, la dose de poudre délivrée dans le réceptacle de café est imprécise, ce qui nuit également à la qualité de l'infusion de café. D'autre part, la stagnation de poudre de café dans les conduits et autres passages de sortie a pour inconvénient d'imposer leur nettoyage périodique , ce qui nécessite l'intervention d'un technicien spécialiste. Or, le danger d'encrassement est particulièrement important lorsqu'il existe un cylindre de distribution.

Dans le brevet français 2.074.679 on a décrit un moulin à café susceptible de moudre, au choix, l'une ou l'autre des deux qualités de café présentes dans la machine. Dans ce but, on a disposé deux meules selon deux axes horizontaux parallèles et un canal de réception, vertical, dont l'axe est disposé dans le plan vertical médian séparant les deux meules. De plus, ces deux meules sont entraînées par un seul même moteur, des moyens étant disposés pour que, au choix, seule l'une des deux meules soit active lorsque le moteur est mis en marche. Cependant, dans ce brevet le café moulu est déversé dans une colonne montante qui débouche sur un plateau de distribution de sorte que la poudre de café est poussée vers le haut. Il en résulte que ce dispositif présente l'inconvénient, déjà mentionné plus haut, qu'à chaque fois la confection d'une infusion de café est réalisée avec une dose de poudre qui était en attente et non pas de la poudre fraîchement moulue.

De plus, lorsque l'on passe d'un moulin à l'autre pour changer de qualité du café, il se trouve plusieurs qualités de poudre de café moulu dans la colonne ascendante de poudre de café en attente ce qui rend une telle machine d'un emploi extrêmement mal commode.

C'est pourquoi la présente invention a pour but de supprimer ces divers inconvénients en réalisant un moulin à café dont la conception est telle que la poudre fraichement moulue soit immédiatement utilisée pour la confection d'une dose d'infusion de café, et que par ailleurs il n'y ait aucun risque de stagnation de poudre dans ce moulin ou la conduite d'évacuation.

A cet effet, la présente invention concerne un moulin à café incorporé dans une machine à café du type comportant au moins une meule à axe horizontal dont le carter comporte une ouverture latérale débouchant dans une tuyère d'évacuation verticale, caractérisé en ce que :
- ladite ouverture latérale est située en regard d'une turbine à effet centrifuge, qui projette le café moulu au travers de ladite ouverture latérale,
- et en ce que ladite tuyère d'évacuation verticale présente un orifice inférieur débouchant au-dessus de l'emplacement d'un réceptacle d'infusion, et dont la partie supérieure présente une ouïe latérale d'entrée disposée en regard de l'ouverture latérale du moulin, la tuyère d'évacuation comportant sensiblement en regard de l'ouïe latérale une paroi intérieure déflectrice apte à diriger vers le bas la poudre de café provenant du moulin.

De préférence, la turbine à effet centrifuge est solidaire de la meule rotative.

Par ailleurs, dans le but de permettre un nettoyage très facile de la tuyère d'évacuation de la poudre de café, celle-ci est montée de façon amovible en étant simplement engagée dans un logement vertical prévu dans le bâti de ce moulin, et dont elle peut être extraite par simple coulissement vers le haut, une butée ou autre moyen approprié immobilisant cette tuyère dans sa position d'utilisation par laquelle son ouïe d'entrée est située exactement en regard de l'ouverture latérale du moulin à café.

Dans une forme de réalisation avantageuse, il est prévu deux moulins individuels distincts disposés de part et d'autre de la tuyère d'évacuation de la poudre de café et qui sont raccordés à deux réserves d'alimentation contenant des cafés d'espèces différentes, la tuyère d'évacuation comportant deux ouïes d'entrée agencées de façon similaire et disposées respectivement en regard de l'ouverture de sortie de l'un et l'autre moulins à café.

Selon une autre caractéristique encore du moulin à café selon l'invention, l'une des meules de celui-ci est déplaçable en translation vis à vis de l'autre meule sous l'action d'un moteur électrique de type dit "pas à pas" asservi à une unité de commande apte à fournir des impulsions dont la fréquence est égale à la fréquence de rotation de ce moteur, afin que chaque impulsion provoque un tour de rotation de celui-ci. Ainsi il est possible de procéder facilement à un réglage très précis de la finesse de mouture.

La présente invention a également pour objet des machines à café à usage professionnel qui sont équipés d'un moulin à café tel que défini précédemment.

Cependant d'autres caractéristiques et avantages de l'objet de l'invention apparaîtront au cours de la description suivante. Celle ci est donnée en référence aux dessins annexés à simple titre indicatif, et sur lesquels:
- la figure 1 est une vue schématique en coupe verticale d'une machine à café équipée d'un moulin selon l'invention
- la figure 2 est une vue en perspective représentant certaines des pièces essentielles de ce moulin, et ce avant leur assemblage
- la figure 3 est une vue en coupe verticale de la tuyère d'évacuation prévue dans ce moulin à café, celle ci étant représentée en position d'utilisation
- la figure 4 est une vue en coupe axiale d'un moulin individuel à café.

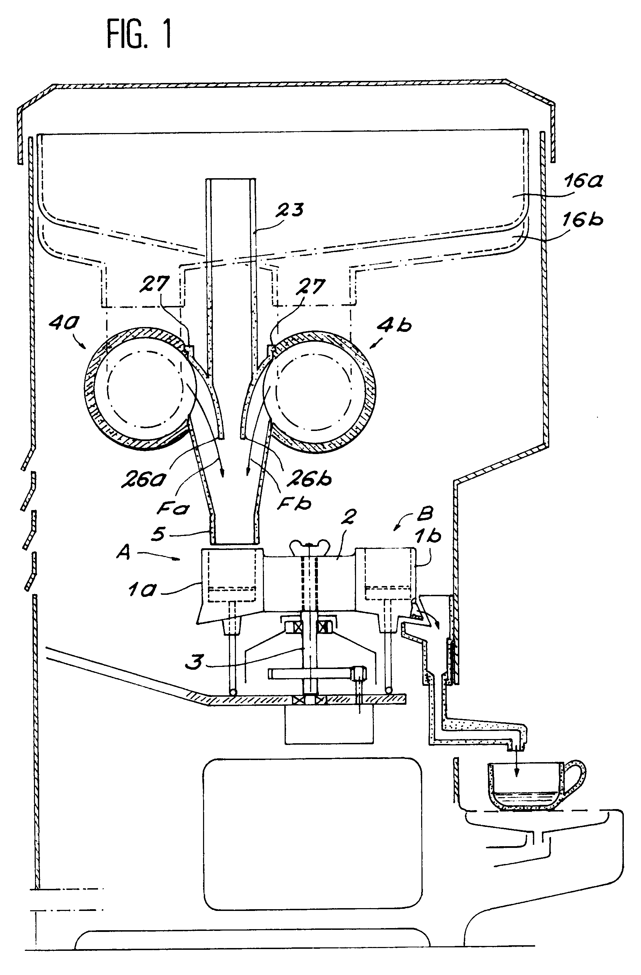

Comme indiqué ci-dessus, la figure 1 représente une machine à café équipée d'un moulin à café selon l'invention. A sa partie inférieure cette machine comporte un poste de remplissage désigné par la référence A, à l'endroit duquel un réceptacle d'infusion de café doit recevoir une dose déterminée de poudre de café. Dans l'exemple représenté, ce réceptacle est solidaire d'un support 2 porté par un axe central rotatif 3. Ce support porte un second réceptacle 1b similaire au réceptacle 1a, mais situé dans une position diamétralement opposée. Ainsi à tour de rôle chacun de ces réceptacles peut être amené à l'endroit du poste A de remplissage, puis à l'endroit d'un second poste B de confection d'une infusion de café, ce qui est le cas du second récipient 1b sur la figure 1.

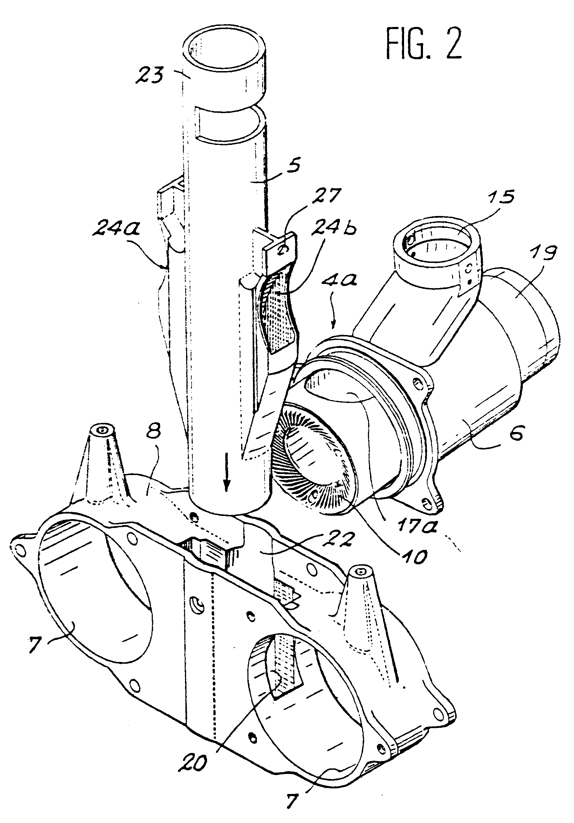

Le moulin à café selon l'invention est disposé à la partie supérieure de la présente machine au dessus du poste A de remplissage. Dans l'exemple représenté, il s'agit non pas d'un moulin à café, mais d'un ensemble comprenant deux moulins individuels distincts désignés par les références générales 4a et 4b. Ces deux moulins sont disposés de part et d'autre d'une tuyère verticale 5 destinée à assurer l'évacuation de la poudre de café fraichement moulue. Cette tuyère, qui est représentée en détail sur la figure 2, est constituée par une pièce en matière plastique moulée. De préférence elle est réalisée en résine polysulfone de façon à faciliter le glissement de la poudre de café et à éviter tout risque de stagnation de celle ci sur les parois de cette tuyère.

Il convient de noter que l'orifice inférieur de cette tuyère se trouve situé exactement au dessus du réceptacle la placé à l'endroit du poste de remplissage A. Ainsi la poudre de café tombe directement dans ce réceptacle, et ce de façon verticale, et non pas en biais comme dans la plupart des machines à café actuelles. Or, la chute verticale de la poudre de café permet l'établissement d'un tas de poudre régulièrement réparti ce qui facilite le tassage ultérieur de cette poudre, et l'obtention d'une infusion de concentration régulière.

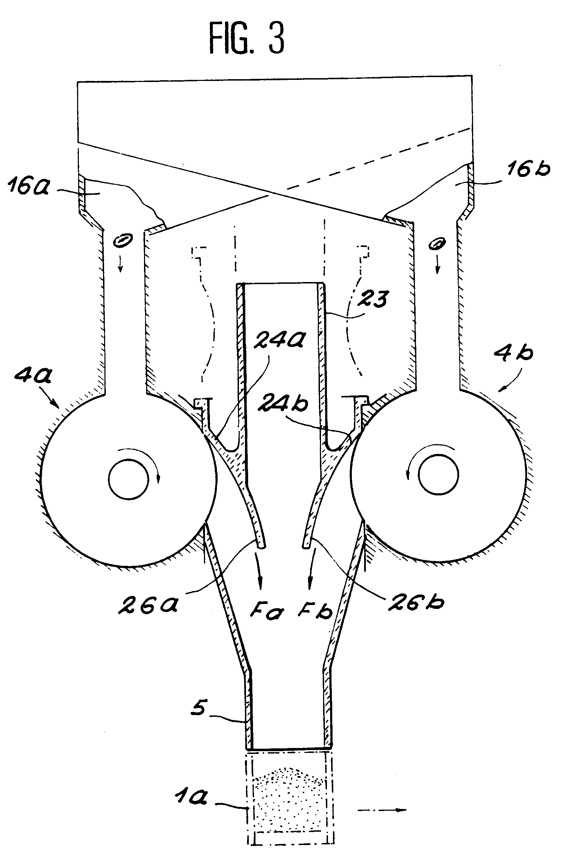

Comme il apparaît sur les dessins, l'axe XY des meules de chaque moulin individuel 4a et 4b est disposé horizontalement. Le carter de chacun de ces moulins est fixé sur un bâti 8 destiné à servir de support à l'ensemble des deux moulins et à la tuyère 5 d'évacuation (voir figure 2). Ce bâti qui n'est pas représenté sur les figures 1 et 3, est lui-même fixé sur le châssis de la machine à café.

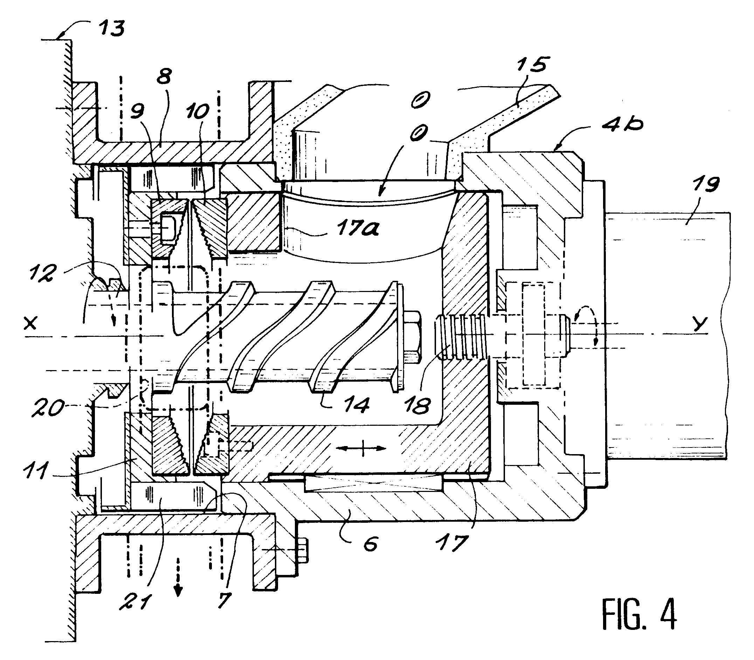

Comme il apparaît sur les figures 2 et 4, ce bâti comporte deux évidements 8 dont chacun constitue la chambre de moûture de l'un des moulins 4a ou 4b. Cette chambre renferme deux meules disposées en vis à vis, dont l'une 9 est rotative cependant que l'autre 10 est fixe. La première de celle ci est fixée sur un rotor 11 porté par l'arbre rotatif 12 d'un moteur d'entraînement 13 fixé sur le bâti 8. A son extrêmité libre cet arbre rotatif porte une vis sans fin 14 destinée à assurer l'entraînement des grains de café dans l'espace compris entre les deux meules. Cette vis se trouve située en regard d'une goulotte 15 d'alimentation assurant le raccordement de chaque moulin avec un réservoir distinct 16a ou 16b, ces deux réservoirs contenant des cafés d'espèces différentes.

Un dispositif de contrôle (non représenté) détermine le passage d'une quantité déterminée de grains de café vers le moulin qui est mis en service. Ainsi en mettant en fonctionnement l'un ou l'autre de ces moulins au choix, on peut obtenir une infusion réalisée à partir de l'une ou l'autre des deux espèces de café prévues dans les réservoirs d'alimentation.

La meule fixe 10 est solidaire d'un support creux 17 constitué par un piston monté coulissant à l'intérieur du carter 6, et qui comporte une ouverture supérieure 17a pour l'entrée des grains de café. Ce support peut être déplacé en translation au moyen d'une vis rotative 18 entraînée par un moteur électrique 19. Ceci permet donc de modifier la position de la meule 10 par rapport à la meule rotative 9, de façon à régler la finesse de la mouture.

Il convient de noter que le moteur de commande 19 est dans le cas présent un moteur de type très particulier, en l'occurrence un moteur électrique du type dit "pas à pas" qui est asservi a une unité de commande apte à fournir des impulsions dont la fréquence est égale à la fréquence de rotation de ce moteur. Cette unité de commande, qui peut comporter un microprocesseur, est également en mesure d'inverser le sens de rotation du moteur 19. De plus, en association avec cette unité de commande, il est prévu une alimentation de puissance ainsi qu'un séquenceur permettant d'aiguiller convenablement les impulsions sur les bobines du moteur 19.

Ainsi chaque impulsion, provenant de cette unité de commande, provoque un tour de rotation du moteur, dans le sens voulu, donc un déplacement axial très limité, et exactement déterminé, de la meule 10 par rapport à la meule rotative 9. En conséquence, même une personne non spécialisée peut régler avec une très grande précision la finesse de mouture du moulin. Du reste la précision obtenue, grâce à l'invention, ne pourrait en aucune façon l'être avec d'autres systèmes de réglage et ce, même avec des systèmes mécaniques ou électro-mécaniques complexes.

Afin d'éviter tout risque de forcer les meules l'une contre l'autre, ce qui entraînerait leur détérioration, il est possible de régler un point zéro sur l'unité de commande. Pour effectuer ce réglage, les meules sont amenées manuellement au contact l'une de l'autre avant d'initialiser l'unité de commande. Celle-ci est alors pourvue d'un compteur décompteur qui interdira tout mouvement du moteur tendant à commander un rapprochement des meules au delà du point zéro. Par ailleurs, cette unité de commande peut également être utilisée pour assurer un réglage automatisé du jeu entre les meules.

Une ouverture latérale 20 de sortie est prévue à mi hauteur dans la paroi de chaque chambre 7 de moûture , l'une de ces ouvertures étant représentée en trait mixte sur la figure 4. Cette ouverture se trouve évidemment située du côté tourné sur la tuyère d'évacuation 5, disposée entre les deux moulins. En regard de la position de cette ouverture, le rotor 11 porte une série d'ailettes 21 constituant une turbine à effet centrifuge. Celle-ci a pour fonction d'assurer l'éjection centrifuge de la poudre de café en évitant ainsi tout risque de stagnation à l'intérieur du moulin correspondant.

Ainsi qu'il apparaît sur la figure 2, le bâti 8 comporte un logement vertical 22 destiné à recevoir la tuyère 5 d'évacuation, et qui débouche à la fois dans le bas et dans le haut. La tuyère d'évacuation 5, est montée de façon amovible à l'intérieur du bâti 8 par simple engagement de sa partie inférieure à l'intérieur du logement 22. Cependant, cette tuyère peut être aisément démontée par simple coulissement vers le haut en saisissant à la main son extrêmité supérieure 23 qui fait saillie à la partie supérieure de la machine à café.

La tuyère 5 est pourvue de deux ouïes d'entrée 24a et 24b situées dans des positions diamétralement opposées. Ces ouïes ont un profil tel que chacune vient s'appliquer contre l'ouverture de sortie 20 du moulin à café correspondant lorsque la tuyère 5 est en place. En regard de chaque ouïe d'entrée, la tuyère 5 comporte une paroi intérieure déflectrice 26a ou 26b qui est apte à diriger vers le bas la poudre de café provenant du moulin sur lequel est fixée l'ouïe d'entrée correspondante, et ce selon les flèches F1 et F2 (voir figure 1). A cet effet chacune de ces parois présente un profil courbe tournant sa concavité en direction du moulin correspondant 4a ou 4b.

Grâce à l'agencement ainsi prévu, la dose de poudre moulue dans l'un ou l'autre moulin passe immédiatement dans la tuyère 5 et est évacuée directement par celle ci dans le réceptacle la, comme représenté sur les figures 1 et 3. Dans ces conditions, il n'existe donc aucun risque de stagnation de poudre de café avec les divers inconvénients que cela comporte.

Dans le cas présent, chaque infusion de café est donc réalisée avec une dose de poudre fraichement moulue. Ceci permet une excellente qualité gustative de la boisson obtenue. Par ailleurs la quantité de poudre utilisée correspond chaque fois très exactement à la dose prévue puisqu'il n'y a aucun risque de stagnation d'une quantité, aussi minime soit t-elle, de poudre de café sur son trajet d'évacuation. Pour cette même raison il n'y a donc pas de possibilité de perte d'une certaine quantité de poudre sur le trajet d'évacuation, ni de risque d'entraînement d'une quantité de poudre de café qui aurait stagnée antérieurement sur ce trajet.

Par ailleurs, la tuyère d'évacuation est très aisément démontable, même par une personne non spécialiste, puisqu'il suffit de l'extraire en dehors du bâti 8 par simple coulissement sous l'effet d'une traction sur le haut. La tuyère peut donc être nettoyée complètement avant d'être remise en place dans sa position d'utilisation.

A ce sujet, il faut observer que des moyens particuliers sont prévus pour assurer un positionnement précis de la tuyère 5 lors de sa remise en place afin que les ouïes d'entrée 24a et 24b concordent très exactement avec les ouvertures de sortie 20 de l'un et l'autre moulin. Ces moyens de positionnement peuvent consister très simplement en une butée 27 prévue à la partie supérieure de chaque ouïe 24a ou 24b et qui est apte à s'appliquer contre le bord correspondant du logement 22 prévu dans le bâti 8. Mais d'autres moyens d'immobilisation pourraient être prévus à la place de ces butées 27, par exemple des moyens d'encliquetage élastique.

Du reste il est bien évident que le moulin à café selon l'invention n'est pas limité à l'exemple décrit ci dessus à simple titre indicatif, ainsi il pourrait parfaitement être prévu un seul moulin au lieu de deux, auquel cas la tuyère d'évacuation 5 comporterait une seule ouïe d'entrée disposée en regard de l'ouverture de service de ce moulin. Mais inversement, il serait possible d'avoir plus de deux moulins individuels en prévoyant un nombre correspondant d'ouïes d'entrée sur la tuyère d'évacuation.

Comme déjà indiqué, la présente invention a également pour objet les machines à café équipées d'un moulin tel que décrit précédemment, une telle machine pouvant être du type de celle représentée à la figure 1, ou de tout autre type.

## Revendications

1. Moulin à café incorporé dans une machine à café du type comportant au moins une meule à axe horizontal dont la carter comporte une ouverture latérale débouchant dans une tuyère d'évacuation verticale, caractérisée en ce que :
- ladite ouverture latérale (20) est située en regard d'une turbine (21) à effet centrifuge, qui projette le café moulu au travers de ladite ouverture latérale (20),
- et en ce que ladite tuyère d'évacuation verticale (5) présente un orifice inférieur débouchant au-dessus de l'emplacement d'un réceptacle (1a) d'infusion, et dont la partie supérieure présente une ouïe latérale d'entrée (24a, 24b) disposée en regard de l'ouverture latérale (20) du moulin, la tuyère d'évacuation (5) comportant sensiblement en regard de l'ouïe latérale (24a, 24b) une paroi intérieure déflectrice (26a, 26b) apte à diriger vers le bas la poudre de café provenant du moulin.

2. Moulin à café selon la revendication 1, dans lequel la turbine à effet centrifuge (21) est solidaire de la meule rotative (9).

3. Moulin à café selon la revendication 1 ou 2, caractérisé en ce que la tuyère (5) d'évacuation de la poudre de café est montée de façon amovible en étant simplement engagée dans un logement vertical (22) prévu dans le bâti (8) de ce moulin, et dont elle peut être extraite par simple coulissement vers le haut, une butée (27) ou autre moyen approprié immobilisant cette tuyère (5) dans sa position d'utilisation pour laquelle son ouïe d'entrée (24a, 24b) est située exactement en regard de l'ouverture de sortie (20) du moulin à café (4a, 4b).

4. Moulin à café selon l'une des revendications précédentes, caractérisé en ce que, de part et d'autre de la tuyère (5) d'évacuation de la poudre de café, il est prévu deux moulins individuels distincts (4a, 4b) raccordés à deux réserves d'alimentation (16a, 16b) contenant des cafés d'espèces différentes, la tuyère d'évacuation (5) comportant deux ouïes d'entrée (24a, 24b) agencées de façon similaire et disposées respectivement en regard de l'ouverture de sortie (20) de l'un et l'autre moulins à café (4a, 4b).

5. Moulin à café selon la revendication 4, caractérisé en ce que les carters (6) des deux moulins individuels (4a, 4b) sont fixés dans un bâti (8) comportant, en son milieu, un logement vertical (22) débouchant à la fois dans le bas et dans le haut et à l'intérieur duquel est placée la tuyère (5) d'évacuation de la poudre de café.

6. Moulin à café selon les revendications précédentes, caractérisé en ce que l'une des meules (10) est déplaçable en translation, vis à vis de l'autre meule (9) sous l'action d'un moteur électrique (19) de type dit "pas à pas " asservi à une unité de commande apte à fournir des impulsions dont la fréquence est égale à la fréquence de rotation de ce moteur, afin que chaque impulsion provoque un tour de rotation de celui-ci.

7. Moulin à café selon la revendication 6, caractérisé en ce que l'unité de commande, à laquelle est asservi le moteur de réglage de la finesse de la moûture, est apte à interdire tout mouvement du moteur tenant à rapprocher les meules au delà d'un point zéro, mémorisé lors de la mise en fonctionnement du moulin.

8. Machine à café comportant un moulin à café situé au dessus de l'emplacement de remplissage d'un réceptacle de confection de café, caractérisé en ce que celui-ci est constitué par un moulin à café selon l'une des revendications 1 à 6.

## Claims

1. Coffee grinder incorporated in a coffee machine of the type comprising at least one grinding wheel having a horizontal axis of which the housing comprises a lateral aperture opening into a vertical discharge nozzle, characterised in that said lateral aperture (20) is located opposite a centrifugal turbine (21) which sprays the ground coffee through said lateral aperture (20) and in that said vertical discharge nozzle (5) has a lower orifice opening above the position of an infusion receptacle (1a) and of which the upper portion has a lateral inlet louvre (24a, 24b) arranged opposite the lateral aperture (20) of the grinder, the discharge nozzle (5) comprising, substantially opposite the lateral louvre (24a, 24b), an internal deflecting wall (26a, 26b) capable of directing the coffee powder originating from the grinder downwardly.

2. Coffee grinder according to claim 1 in which the centrifugal turbine (21) is integral with the rotating grinding wheel (9).

3. Coffee grinder according to claim 1 or 2, characterised in that the nozzle (5) for discharging the coffee powder is mounted detachably by being merely engaged in a vertical recess (22) provided in the frame (8) of this grinder and from which it may be removed by mere upward sliding, a stop (27) or other suitable means immobilising this nozzle (5) in its position of use for which purpose its inlet louvre (24a, 24b) is located exactly opposite the outlet aperture (20) of the coffee grinder (4a, 4b).

4. Coffee grinder according to one of the preceding claims, characterised in that on either side of the nozzle (5) for discharging the coffee powder there are provided two distinct individual grinders (4a, 4b) connected to two supply reserves (16a, 16b) containing coffees of different types, the discharge nozzle (5) comprising two inlet louvres (24a, 24b) arranged in similar manners and respectively disposed opposite the outlet aperture (20) of the two coffee grinders (4a, 4b).

5. Coffee grinder according to claim 4, characterised in that the housings (6) of the two individual grinders (4a, 4b) are fixed in a frame (8) comprising, in its centre, a vertical recess (22) which opens both downwardly and upwardly and inside which the coffee powder discharge nozzle (5) is placed.

6. Coffee grinder according to the preceding claims, characterised in that one of the grinding wheels (10) is capable of translation relative to the other grinding wheel (9) by the action of an electric motor (19) of the so-called "step-by-step" type subjected to a control unit capable of supplying pulses of which the frequency is equal to the frequency of rotation of this motor so that each pulse causes a revolution thereof.

7. Coffee grinder according to claim 6, characterised in that the control unit to which the motor for adjusting the fineness of the ground material is subjected is capable of preventing movement of the motor tending to bring the grinding wheels beyond a zero point which is memorised when the grinder is put into operation.

8. Coffee machine comprising a coffee grinder located above the filling position of a coffee making receptacle, characterised in that it consists of a coffee grinder according to one of claims 1 to 6.

## Patentansprüche

1. Kaffeemühle innerhalb einer Kaffeemaschine mit mindestens einer Mahlvorrichtung mit horizontaler Achse, deren Gehäuse eine seitliche Öffnung aufweist, die in ein senkrechtes Auslaßrohr mündet,
dadurch **gekennzeichnet**,
daß sich die seitliche Öffnung (20) gegenüber einer Schleuderturbine (21) befindet, die den gemahlenen Kaffee durch die seitliche Öffnung (20) schleudert, daß das senkrechte Auslaßrohr (5) eine untere Öffnung aufweist, die oberhalb der Position eines Aufgußbehälters (1a) mündet, und deren oberer Abschnitt einen seitlichen Einlaß (24a,24b) aufweist, der gegenüber der seitlichen Öffnung (20) der Mühle vorgesehen ist, wobei das Auslaßrohr (5) im wesentlichen gegenüber dem seitlichen Einlaß (24a,24b) eine innere Ablenkwand (26a,26b) zum Leiten des von der Mühle kommenden Kaffeepulvers nach unten aufweist.

2. Kaffeemühle nach Anspruch 1, bei der die Schleuderturbine (21) formschlüssig mit der Dreh-Mühlvorrichtung (9) verbunden ist.

3. Kaffeemühle nach Anspruch 1 oder 2,
dadurch **gekennzeichnet**,
daß das Auslaßrohr (5) für das Kaffeepulver lösbar befestigt ist, dadurch daß es einfach in einer senkrechten Halterung (22) angebracht ist, die in dem Gehäuse (8) der Mühle vorgesehen ist, und von der es durch ein einfaches Schwenken nach oben abgenommen werden kann, wobei ein Anschlag (27) oder eine andere Einrichtung, die zum Festhalten des Rohres (5) in seiner Betriebsstellung geeignet ist, in der sein Einlaß (24b,24b) genau gegenüber der Auslaßöffung (20) der Kaffeemühle (4a,4b) liegt.

4. Kaffeemühle nach einem der vorhergehenden Ansprüche,
dadurch **gekennzeichnet**,
daß zu beiden Seiten des Auslaßrohres (5) für das Kaffeepulver zwei getrennte Mühlen (4a,4b) vorgesehen sind, die mit zwei Vorratsbehältern (16a,16b) verbunden sind, die verschiedene Kaffeesorten enthalten, wobei das Auslaßrohr (5) zwei Einlässe (24a,24b) aufweist, die in gleicher Weise angeordnet sind und jeweils gegenüber der Ausgangsöffnung (20) der einen und der anderen Kaffeemühle (4a,4b) angeordnet sind.

5. Kaffeemühle nach Anspruch 4,
dadurch **gekennzeichnet**,
daß die Gehäuse (6) der beiden einzelnen Mühlen (4a,4b) in einem Gehäuse (8) angebracht sind, das in seiner Mitte eine senkrechte Aufnahme (22) aufweist, die sich gleichzeitig nach oben und nach unten öffnet, und in deren Inneren das Auslaßrohr (5) des Kaffeepulvers angeordnet ist.

6. Kaffeemühle nach einem der vorhergehenden Ansprüche,
dadurch **gekennzeichnet**,
daß eine der Mahlvorrichtungen (10) seitlich gegenüber der anderen Mahlvorrichtung (9) verschiebbar ist, durch einen elektrischen Schrittmotor (19), der von einer Steuereinheit gesteuert wird, die Impulse liefert, deren Frequenz gleich der Rotationsfrequenz dieses Motors ist, so daß jeder Impuls eine Umdrehung des Motors hervorruft.

7. Kaffeemühle nach Anspruch 6,
dadurch **gekennzeichnet**,
daß die Steuereinheit, die den Steuermotor für die Mahlfeinheit steuert, jegliche Bewegung des Motors verhindern kann, wenn er die Mahlvorrichtungen gegenüber einem Punkt Null hinaus anzunähern versucht, der bei der Inbetriebnahme der Mühle gespeichert wurde.

8. Kaffeemaschine mit einer Kaffeemühle oberhalb der Position zur Füllung eines Gefäßes mit dem fertigen Kaffee,
dadurch **gekennzeichnet**,
daß diese durch eine Kaffeemühle gemäß einem der Ansprüche 1 bis 6 gebildet ist.
